# EUROPÄISCHE PATENTSCHRIFT

(11) **EP 3 999 211 B1**
(45) Veröffentlichungstag und Bekanntmachung des Hinweises auf die Patenterteilung: **20.09.2023**
(21) Anmeldenummer: 21720705.9
(22) Anmeldetag: 16.04.2021
(51) Int. Cl.: B01D 46/00, B01D 46/10, B01D 46/52, B60H 3/06

(54) **FILTERELEMENT FÜR EINE LUFTFILTEREINRICHTUNG EINES KRAFTWAGENS UND LUFTFILTEREINRICHTUNG**
FILTER ELEMENT FOR AN AIR FILTER DEVICE IN A MOTOR VEHICLE, AND AIR FILTER DEVICE
ÉLÉMENT FILTRANT POUR UN DISPOSITIF DE FILTRE À AIR DANS UN VÉHICULE À MOTEUR ET DISPOSITIF DE FILTRE À AIR

(30) Priorität: 22.04.2020 DE 102020110941; 02.02.2021 DE 102021000515
(43) Veröffentlichungstag der Anmeldung: 25.05.2022
(73) Patentinhaber: Mercedes-Benz Group AG, 70372 Stuttgart (DE)
(72) Erfinder: SCHUMACHER, Eric, 70565 Stuttgart (DE)
(74) Vertreter: Novagraaf Group
(86) Internationale Anmeldenummer: PCT/EP2021/059868
(87) Internationale Veröffentlichungsnummer: WO 2021/213906

(56) Entgegenhaltungen:
- DE-A1-102005 031 512
- DE-A1-102009 015 095
- DE-U1-202006 004 420

## Beschreibung

Die Erfindung betrifft ein Filterelement für eine Luftfiltereinrichtung eines Kraftwagens, mit einem Rahmen, welcher ein Filtermaterial des Filterelements zumindest bereichsweise umgibt. Der Rahmen umfasst eine Frontwand, welche sich im Wesentlichen senkrecht zu einer Einführrichtung erstreckt. In die Einführrichtung ist das Filterelement in einen Aufnahmeraum eines Gehäuses der Luftfiltereinrichtung einführbar. Des Weiteren betrifft die Erfindung eine Luftfiltereinrichtung mit einem solchen Filterelement.

Die DE 10 2007 018 215 A1 beschreibt einen Luftfilter für eine Klimaanlage eines Kraftfahrzeugs, bei welchem ein Rahmen um ein gefaltetes Filtermedium umläuft. Von einer Wand des Rahmens stehen zwei Aufnahmen ab, in welche Rastmittel eingeführt werden können. Die Rastmittel sind an einem Deckel angeordnet, mit welchem ein den Luftfilter aufnehmendes Gehäuse verschließbar ist. Ein Dichtelement, welches bei mittels des Deckels verschlossenem Gehäuse am Rand des Gehäuses anliegt, ist einstückig mit einer Verbindungsplatte des Deckels ausgebildet.

Die DE 10 2015 004 645 A1 beschreibt ein Filterelement zum Filtern von Verbrennungsluft, welche einer Brennkraftmaschine eines Kraftfahrzeugs zugeführt wird. Das Filterelement weist einen Filtermediumkörper auf, welcher an einem innenliegenden Trägerkörper in Form eines Stützgerüsts abgestützt und gehalten ist. An axialen Stirnseiten des Trägerkörpers befinden sich Endscheiben. Über jeweilige Verbindungsteile sind zwei laschenförmige Bauteile, welche jeweilige Verrastungselemente aufweisen, mit einer der Endscheiben verbunden. Die Bauteile mit den jeweiligen Verrastungselementen sind über die Verbindungsteile einteilig mit der Endscheibe ausgebildet. Des Weiteren stehen die Bauteile hierbei in seitlicher Richtung von dem Filterelement ab. Die Verrastungselemente verrasten in einer Einbaulage des Filterelements mit Gegenrastelementen, welche an einem Filtergehäuse angeordnet sind. Mittels eines auf das Filtergehäuse aufgesetzten Deckels werden die Verrastungselemente in einer Verrastungsposition gesichert.

Als nachteilig ist hierbei der Umstand anzusehen, dass die seitlich abstehenden Bauteile mit den Verrastungselementen vergleichsweise viel Bauraum innerhalb des Filtergehäuses beanspruchen, welcher somit nicht für das Filtern der zu filternden Luft genutzt werden kann oder zur Verfügung steht.

Des Weiteren kann der Deckel auch dann an dem Filtergehäuse angebracht werden, wenn sich kein Filterelement in dem Filtergehäuse befindet. Beides ist nachteilig. Ein weiteres gattungsgemässes Luftfilterelement ist in der DE202006004420U offenbart.

Aufgabe der vorliegenden Erfindung ist es daher, ein Filterelement der eingangs genannten Art zu schaffen, welches eine gute Ausnutzung eines zur Verfügung stehenden Bauraums und einen funktionssicheren Betrieb der Luftfiltereinrichtung ermöglicht.

Diese Aufgabe wird durch ein Filterelement mit den Merkmalen des Patentanspruchs 1 und durch eine Luftfiltereinrichtung mit den Merkmalen des Patentanspruchs 4 gelöst. Vorteilhafte Ausgestaltungen mit zweckmäßigen Weiterbildungen der Erfindung sind in den abhängigen Patentansprüchen angegeben.

Das erfindungsgemäße Filterelement für eine Luftfiltereinrichtung eines Kraftwagens weist einen Rahmen auf, welcher ein Filtermaterial des Filterelements zumindest bereichsweise umgibt. Der Rahmen umfasst eine Frontwand. Die Frontwand erstreckt sich senkrecht zu einer Einführrichtung, in welche das Filterelement in einen Aufnahmeraum eines Gehäuses der Luftfiltereinrichtung - im Weiteren auch als "Luftfiltergehäuse" oder "Gehäuse" bezeichnet - einführbar ist. An einer Frontseite der Frontwand ist wenigstens ein Befestigungselement angeordnet. An dem wenigstens einen Befestigungselement ist ein Deckel der Luftfiltereinrichtung festlegbar, welches zum Verschließen des Aufnahmeraums ausgebildet ist.

Das wenigstens eine Befestigungselement weist zumindest ein von der Frontseite der Frontwand beabstandetes Halteteil auf. Hierbei ist das zumindest eine Halteteil dann zum Zweck des Verschließens des Aufnahmeraum mittels des Deckels der Luftfiltereinrichtung von einem korrespondierenden Halteteil des Deckels hintergreifbar. Auf diese Weise kann eine besonders dichtsitzende Anlage des Deckels am Luftfiltergehäuse erreicht werden. Durch den so herbeizuführenden Verschluss ist auch der Deckel gut in seiner Schließstellung in der Lage gesichert.

Erfindungsgemäß weist das wenigstens eine Befestigungselement zwei Halteteile auf, welche als von einem Schaft des Befestigungselements quer zur Einführrichtung abstehende Flügel ausgebildet sind. Ein derartiger jeweiliger Flügel lässt sich von dem korrespondierenden Halteteil des Deckels besonders einfach hintergreifen. Zudem beansprucht ein Befestigungselement mit derartigen Flügeln bzw. Halteteilen nur wenig Bauraum, wobei sich eine sichere Fixierung des Deckels im Bereich einer Aufnahmeöffnung für das Filterelement an dem Luftfiltergehäuse erreichen lässt, indem ein Verschlusselement des Deckels mit dem Befestigungselement zusammenwirkt und hierbei das Verschlusselement mit einem korrespondierenden Halteteil die Flügel hintergreift.

Von besonderem Vorteil ist es weiterhin, dass das jeweilige Halteteil, das einen ersten und einen zweiten Endbereich aufweist, von dem einem Endbereich zum anderen Endbereich eine rampenförmige Gestalt aufweist. An dem derartigen, rampenförmigen Endbereich kann das korrespondierende Halteteil beim Festlegen des Deckels entlang bewegt werden, wenn der Deckel am Gehäuse in seiner Schließstellung gesichert wird. Durch die rampenförmige Gestalt der filterseitigen Halteteile - oder auch Flügel - kann eine besonders dicht sitzende Anlage des Deckels am Luftfiltergehäuse erreicht werden. Aufgrund der rampenförmigen Gestalt des Halteteils kann nämlich beim Sichern des Deckels in seiner Schließstellung, in welcher der Deckel an dem Gehäuse anliegt, eine stärkere, die Abdichtung unterstützende Bewegung des Deckels hin zu dem Gehäuse erreicht werden.

Von Vorteil ist bei dem Filterelement, welche das an der Frontseite der Frontwand angeordnete Befestigungselement aufweist, weiterhin, dass die Luftfiltereinrichtung des Kraftwagens nur dann betrieben werden kann, wenn das Filterelement in den Aufnahmeraum eingebaut beziehungsweise eingebracht ist. Denn zum sicheren Verschließen des Aufnahmeraums mittels des Deckels der Luftfiltereinrichtung ist das wenigstens eine Befestigungselement erforderlich, welches Bestandteil des Filterelements ist. Mit anderen Worten ist eine in der Lage gesicherte beziehungsweise feste Anlage des Deckels an dem Luftfiltergehäuse nicht möglich, wenn das Filterelement nicht in den Aufnahmeraum des Gehäuses eingebracht ist. Auf diese Weise kann verhindert werden, dass die Luftfiltereinrichtung unsachgemäß betrieben wird. Folglich ermöglicht das Filterelement einen funktionssicheren Betrieb der Luftfiltereinrichtung.

Des Weiteren wird das wenigstens eine Befestigungselement zusammen mit dem Filterelement ausgetauscht, wenn das Filterelement gewechselt wird. Dies ist im Hinblick darauf vorteilhaft, dass beispielsweise eine Spanngeometrie und/oder Haltegeometrie des Befestigungselements einem Verschleiß unterliegen, wenn der Deckel der Luftfiltereinrichtung an dem Befestigungselement festgelegt wird, um mittels des Deckels den in dem Luftfiltergehäuse ausgebildeten Aufnahmeraum zu verschließen.

Vorzugsweise ist das wenigstens eine Befestigungselement in Hochrichtung der Frontwand von einem unteren Rand der Frontwand beabstandet und steht entgegen der Einführrichtung von der Frontseite ab.

Durch diese frei zugängliche Anordnung des Befestigungselements an der Front des Filterelements ist eine gute Zugänglichkeit für die Befestigung mit dem deckelseitigen Verschlusselement, das vorteilhaft einen hülsenförmigen Haltebereich aufweist, in den das Befestigungselement einführbar ist. Insbesondere wird damit erreicht, dass das an dem Deckel angeordnete Verschlusselement das Befestigungselement umschließt oder umgreift. Dies ist für eine robuste und zuverlässige Fixierung des Deckels an dem Filterelement vorteilhaft.

Durch Drehen des Verschlusselements um eine Drehachse ist das von dem Haltebereich umgriffene wenigstens eine Befestigungselement mit dem Verschlusselement des Deckels verspannbar, indem die Halteelemente seitens des Filterelements mit den Halteelementen am deckelseitigen Verschlusselement in Anlage kommen. Auf diese Weise ist eine sehr robuste und belastbare Festlegung beziehungsweise Fixierung des Deckels an dem Filterelement erreichbar.

Es genügt dabei, dass sich das Befestigungselement lediglich ein kleines Stück weit von der Frontseite entgegen der Einführrichtung erstreckt. Die damit einhergehende geringe Höhe des Befestigungselements, gesehen in Einführrichtung, ist im Hinblick auf eine gute Ausnutzung des zur Verfügung stehenden Bauraums durch das Filtermaterial des Filterelements vorteilhaft.

In einer weiteren bevorzugten Ausgestaltung steht von der Frontwand des Filterelements an einer Schmalseite eine Haltelasche über. Durch Einbringen der Haltelasche in eine auf Seiten des Gehäuses der Luftfiltereinrichtung vorgesehene Haltemulde ist das Filterelement gegen ein Bewegen sicherbar.

Wenn die Haltelasche in die Haltemulde des Gehäuses eingebracht ist, kann das Filterelement nicht mehr weiter in das Gehäuse eingeführt oder entgegen der Einführrichtung aus dem Gehäuse herausgezogen werden. Dies gilt auch, wenn die Einführrichtung nicht horizontal ist, sondern das Filterelement schräg zur Horizontalen in den Aufnahmeraum eingeführt oder eingeschoben wird. Auch in einem solchen Fall verhindert die Haltelasche ein Herausrutschen aus dem Aufnahmeraum oder ein weiteres Hineinrutschen in den Aufnahmeraum, sobald die Haltelasche in die Haltemulde eingebracht ist. Durch das Einbringen der Haltelasche in die Haltemulde ist sichergestellt, dass das gesamte Filterelement lagerichtig ausgerichtet ist. Das heißt, in dieser Einbauposition des Filterelements im Gehäuse ist gleichzeitig auch das wenigstens eine Befestigungselement lagerichtig für die Befestigung des Deckels der Luftfiltereinrichtung ausgerichtet.

Steht die Haltelasche an einer - bezogen auf die Einbaulage - unteren Schmalseite der Frontwand über, bewirkt bei einem Einbringen oder Einschieben des Filterelements in den Aufnahmeraum die Schwerkraft, dass sich die Frontwand bei Erreichen der Haltemulde im Gehäuse durch die Haltelasche absenkt. Damit ist das Filterelement äußerst einfach im Gehäuse der Luftfiltereinrichtung montierbar.

Das Vorhandensein der Haltelasche, die zum Einsetzen in der auf Seiten des Gehäuses vorgesehene Haltemulde vorgesehen ist, bringt es zudem mit sich, dass bei einem Ausbauen des Filterelements, also bei einem Herausnehmen des Filterelements aus dem Aufnahmeraum, die Frontwand und somit das gesamte Filterelement zunächst ein Stück weit angehoben werden muss. Auf diese Weise kann verhindert werden, dass das Filterelement - genauer das Filtermaterial des Filterelements - im Bereich des Gehäuses der Luftfiltereinrichtung hängenbleibt und dabei möglicherweise beschädigt wird. Dies ist insbesondere dann sinnvoll, wenn das Filterelement nur vorübergehend ausgebaut wird, etwa um Staub oder Feststoffe durch Abschütteln oder Abklopfen von dem Filterelement zu entfernen und das Filterelement anschließend wieder in das Gehäuse einzubauen.

Vorzugsweise ist die Haltelasche einstückig mit dem Grundkörper der Frontwand ausgebildet. So lässt sich die Haltelasche besonders einfach und aufwandsarm bei der Fertigung des Rahmens bereitstellen. Des Weiteren kann vorgesehen sein, dass die Haltelasche eine Dicke in die Einführrichtung aufweist, welche einer Dicke der Schmalseite des plattenförmigen Grundkörpers entspricht. Dadurch ist die Haltelasche besonders robust und belastbar ausgebildet.

Vorzugsweise weist das Filterelement wenigstens das Filtermaterial abstützenden Stützsteg auf, der sich zwischen zwei gegenüberliegenden Wänden des Rahmens des Filterelements erstreckt, wobei er die beiden Wände miteinander verbindet. Durch das Vorsehen eines solchen Stützstegs sind der Rahmen und zudem das Filtermaterial gut stabilisiert, welches der Rahmen des Filterelements zumindest bereichsweise (und vorzugsweise vollständig) umgibt, beziehungsweise um welches der Rahmen des Filterelements zumindest bereichsweise (und vorzugsweise vollständig) umläuft. Dies ermöglicht es beispielsweise, nach einem Entnehmen des Filterelements aus dem Aufnahmeraum auf einer Rohluftseite des Filtermaterials zurückgehaltene Feststoffe in Form von Staub oder dergleichen von dem Filtermaterial durch Abschütteln oder Abklopfen zu entfernen, ohne eine Formgebung des Filtermaterials dauerhaft zu beeinträchtigen.

Wenn das Filtermaterial eine Mehrzahl von Falten aufweist, so kann der Stützsteg nach Art von Zinken oder Stiften ausgebildete Vorsprünge aufweisen, welche von einem beispielsweise leistenförmigen Rücken des Stützstegs abstehen und in die Falten des Filtermaterials eingreifen. So kann auch bei und nach einem Entfernen von Feststoffen von dem gefalteten Filtermaterial durch Abklopfen oder Ausschütteln oder dergleichen die Form der Falten des Filtermaterials sehr gut beibehalten werden.

Die erfindungsgemäße Luftfiltereinrichtung für einen Kraftwagen weist ein erfindungsgemäßes Filterelement auf, wobei das Filterelement in einen Aufnahmeraum eingebracht ist, welcher in einem Gehäuse der Luftfiltereinrichtung ausgebildet ist.

Die Luftfiltereinrichtung kann insbesondere als Luftfiltereinrichtung einer Klimaanlage beziehungsweise Belüftungseinrichtung des Kraftwagens ausgebildet sein. Des Weiteren kann die Luftfiltereinrichtung für einen Ansaugtrakt eines Verbrennungsmotors des Kraftwagens vorgesehen sein, also als Filter für die von einem Verbrennungsmotor angesaugte Luft.

Der Aufnahmeraum ist mittels eines Deckels zur Abdichtung des Gehäuses der Luftfiltereinrichtung gegenüber der Umgebung verschließbar, wobei der Deckel wenigstens ein Verschlusselement aufweist, das an den beiden rampenförmigen Halteteilen des wenigstens einen Befestigungselements des erfindungsgemäßen Filterelements festgelegt wird. Durch die Festlegung des Deckels direkt am Filterelement, bzw. am Befestigungselement des Filterelements, ist sichergestellt, dass nur bei Vorhandensein und korrektem Einbau eines erfindungsgemäßen Filterelements in den Aufnahmeraum das Luftfiltergehäuse mittels des Deckels verschlossen werden kann. Damit wird zuverlässig vermieden, dass die Luftfiltereinrichtung ohne eingesetztes Filterelement betrieben werden kann.

Vorzugsweise ist das wenigstens eine Verschlusselement des Deckels um eine Drehachse drehbar und dabei hülsenförmig aufgebaut, so dass es das wenigstens eine filterseitige Befestigungselement umgreifen kann, und in einer Schließstellung die zwei Halteteile des deckelseitigen Verschlusselements die beiden korrespondierenden Halteteile des filterseitigen Befestigungselements hintergreifen und - aufgrund der rampenförmigen Gestaltung der Halteteile auf Seiten des Befestigungselements - gegeneinander verspannen. Aufgrund dieses Zusammenwirkens des Verschlusselements mit dem Befestigungselement ist eine besonders sichere und dichte Fixierung des Deckels in seiner Lage an dem Gehäuse erreichbar.

Insbesondere kann auch vorgesehen sein, dass der Deckel schwenkbar an dem Luftfiltergehäuse gehalten ist. Damit wird eine sehr intuitive Bedienung der Einrichtung möglich.

In einer weiteren bevorzugten Ausgestaltung ist vorgesehen, dass das Gehäuse der Luftfiltereinrichtung wenigstens eine Haltemulde aufweist, in welche die Haltelasche des Filterelements einsetzbar ist.

Wenn die Haltelasche des Filterelements in die vorgesehene Haltemulde eingreift, ist das Filterelement - bzw. das Befestigungselement daran - korrekt im Aufnahmeraum positioniert, so dass der Deckel der Luftfiltereinrichtung mittels des wenigstens einen Verschlusselements an dem wenigstens einen filterseitigen Befestigungselement befestigt werden kann, und auf diese Weise das Gehäuse verschlossen wird. Durch diese Anordnung kann sichergestellt werden, dass nur bei korrekt in das Luftfiltergehäuse eingebautem Filterelement der Aufnahmeraum mittels des Deckels verschlossen werden kann, und die Luftfiltereinrichtung nicht versehentlich ohne Filterelement betrieben wird.

Vorzugsweise weist das Gehäuse der Luftfiltereinrichtung wenigstens ein Rückhalteelement auf, welches einer Haltemulde in Einführrichtung vorgelagert ist. Ein derartiges Rückhalteelement - insbesondere in Verbindung mit der Haltemulde - sorgt dafür, dass sich das Filterelement, sobald sich die Haltelasche in der Haltemulde befindet, nicht unbeabsichtigt aus dem Aufnahmeraum herausbewegen kann. Insbesondere kann vorgesehen sein, dass die Haltelasche an dem wenigstens einen Rückhalteelement anliegt, wenn die Haltelasche in die Haltemulde eingebracht ist und der Deckel an dem Filterelement festgelegt ist.

Das wenigstens eine Rückhalteelement kann insbesondere als in Einführrichtung gesehen schräg ansteigender, rampenförmiger Haltezinken ausgebildet sein. In Längserstreckungsrichtung der Haltemulde - also quer zur Einführrichtung - können mehrere derartige rampenförmige Haltezinken der Haltemulde in Einführrichtung vorgelagert sein. Dann lässt sich eine Unterseite der Haltelasche sehr einfach über diese rampenförmigen Haltezinken schieben, bis sich dann die Haltelasche, vorzugsweise bedingt durch die Schwerkraft, in die Haltemulde absenkt, welche den Haltezinken in Einführrichtung nachgelagert ist. Die Haltelasche kann also insbesondere mit den rampenförmigen Haltezinken hinterschnittig werden, sobald die Haltelasche in die Haltemulde eingreift.

Vorzugsweise weist das Gehäuse wenigstens eine Rampe auf, welche in Längserstreckungsrichtung der Haltemulde neben der Haltemulde angeordnet ist. Hierbei ist die wenigstens eine Rampe ausgehend von der Haltemulde in Einführrichtung gesehen schräg abfallend ausgebildet. Durch eine derartige Rampe kann sehr einfach und sicher verhindert werden, dass sich bei einem Herausnehmen oder Herausziehen des Filterelements aus dem Aufnahmeraum das Filterelement verhakt und/oder das Filtermaterial beschädigt wird.

Wenn das Filterelement den wenigstens einen Stützsteg aufweist, welcher die Seitenwände des Rahmens miteinander verbindet, so verhindert die wenigstens eine Rampe auch, dass das Filterelement mit einem solchen Stützsteg an einem Bauteil des Gehäuses hängenbleibt beziehungsweise sich der Stützsteg an einem solchen Bauteil verhakt.

Vorzugsweise weist die wenigstens eine Rampe einen Scheitelbereich auf, wobei eine Höhe der wenigstens einen Rampe in dem Scheitelbereich größer ist als die maximale Höhe des wenigstens einen Rückhalteelements. So kann sehr einfach sichergestellt werden, dass der Rahmen des Filterelements beim Herausziehen des Filterelements aus dem Aufnahmeraum nicht an dem wenigstens einen Rückhalteelement hängenbleibt.

Zusätzlich oder alternativ kann vorgesehen sein, dass die wenigstens eine Rampe in Einführrichtung gesehen zu dem Scheitelbereich hin schräg ansteigend ausgebildet ist. Dies erleichtert das Einführen des Filterelements in den Aufnahmeraum, welcher in dem Gehäuse der Luftfiltereinrichtung ausgebildet ist.

Die für das erfindungsgemäße Filterelement beschriebenen Vorteile und bevorzugten Ausführungsformen gelten auch für die erfindungsgemäße Luftfiltereinrichtung und umgekehrt.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: in einer schematischen Perspektivansicht ein Filterelement für eine Luftfiltereinrichtung eines Kraftwagens;
- Fig. 2: eine vergrößerte Detailansicht des Filterelements gemäß Fig. 1, in welcher ein an einer Frontseite einer Frontwand eines Rahmens des Filterelements angeordnetes Befestigungselement besser zu sehen ist;
- Fig. 3: ausschnittsweise ein Gehäuse der Luftfiltereinrichtung, welches zum Aufnehmen des Filterelements gemäß Fig. 1 ausgebildet ist;
- Fig. 4: eine teilweise geschnittene Detailansicht im Bereich einer Aufnahmeöffnung des Gehäuses, über welche das Filterelement gemäß Fig. 1 in das Gehäuse eingeschoben werden kann;
- Fig. 5: in einer teilweise geschnittenen Seitenansicht das Einbringen des Filterelements gemäß Fig. 1 in das Gehäuse gemäß Fig. 3;
- Fig. 6: in einer teilweise geschnittenen Seitenansicht das in einen Aufnahmeraum des Gehäuses eingebrachte Filterelement, welches in Einführrichtung seine Endlage erreicht hat;
- Fig. 7: in einer vergrößerten Detailansicht einen frontseitigen Abschnitt des Filterelements sowie des Gehäuses, wobei die Frontwand des Filterelements sich auf der Höhe einer Haltemulde befindet, welche auf Seiten des Gehäuses ausgebildet ist;
- Fig. 8: das schwerkraftbedingte Absenken der Frontwand derart, dass eine einstückig mit der Frontwand ausgebildete Haltelasche des Filterelements in die Haltemulde eingreift;
- Fig. 9: ausschnittsweise und in einer frontseitigen Ansicht einen Deckel für das Gehäuse der Luftfiltereinrichtung, wobei der Deckel ein als Drehverschluss ausgebildetes Verschlusselement aufweist, welches zum Festlegen des Deckels mit dem in Fig. 2 gezeigten Befestigungselement des Filterelements zusammenwirkt;
- Fig. 10: ausschnittsweise eine rückwärtige Ansicht des Deckels im Bereich des Drehverschlusses;
- Fig. 11: einen ersten Schritt bei einem Ausbau des Filterelements beziehungsweise bei einer Demontage des Filterelements, wobei das Filterelement im Bereich der Frontwand angehoben und somit die Haltelasche aus der Haltemulde herausbewegt wird;
- Fig. 12: in einer teilweise geschnittenen Ansicht das Entlanggleiten eines Stützstegs einer Mehrzahl von Stützstegen des Rahmens über zu beiden Seiten der Haltemulde angeordnete Rampen beim Herausziehen des Filterelements aus dem Aufnahmeraum; und
- Fig. 13: perspektivisch den zwei Stützstege umfassenden Rahmen des Filterelements gemäß Fig. 1 ohne ein Filtermaterial des Filterelements.
- Fig. 14: eine Schnittansicht der Luftfiltereinrichtung im Bereich des Deckels, wobei ein filterseitiges Befestigungselement von einem deckelseitigen Verschlusselement umgriffen wird; und
- Fig. 15: die Schnittansicht gemäß Fig. 14, wobei sich Befestigungselement und Verschlusselement in Schließstellung befinden.

In den Fig. sind gleiche oder funktionsgleiche Elemente mit gleichen Bezugszeichen versehen.

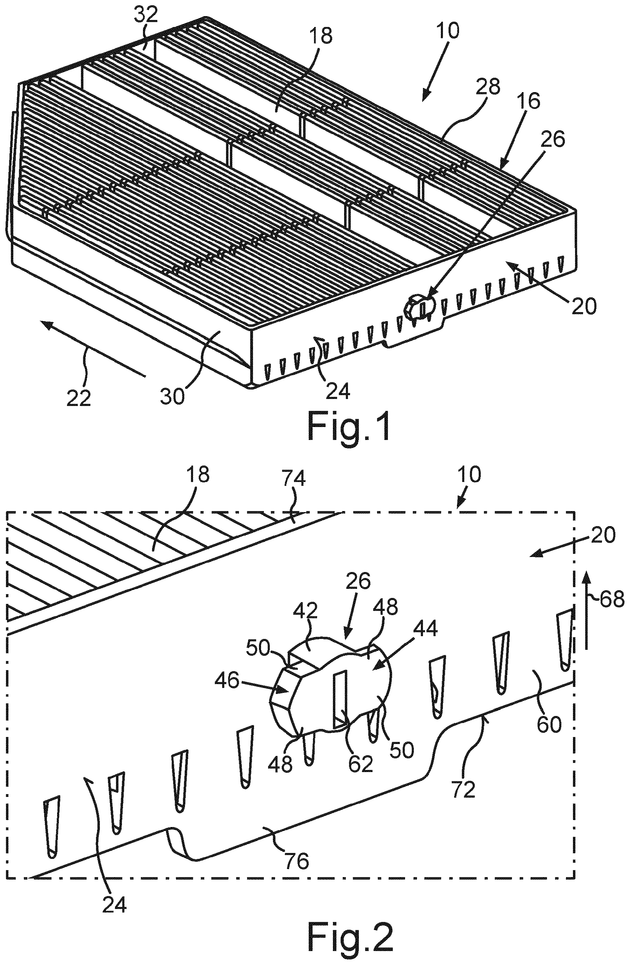

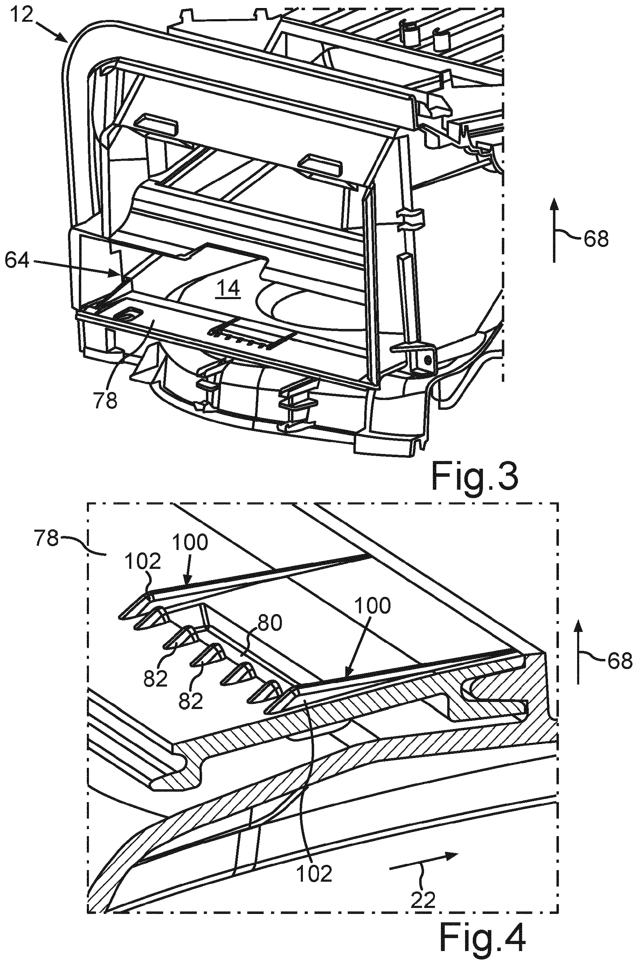

In Fig. 1 ist in einer schematischen Perspektivansicht ein Filterelement 10 gezeigt, welches zum Einbau in ein Gehäuse 12 (vergleiche Fig. 3) einer Luftfiltereinrichtung eines insbesondere als Lastkraftwagen ausgebildeten Kraftwagens vorgesehen ist. In dem Gehäuse 12 der Luftfiltereinrichtung ist ein Aufnahmeraum 14 ausgebildet (vergleiche Fig. 3), in welchen das in Fig. 1 gezeigte Filterelement 10 eingebracht oder eingebaut werden kann.

Das Filterelement 10 umfasst einen Rahmen 16, welcher ein Filtermaterial 18 des Filterelements 10 umgibt beziehungsweise einfasst. Bei Ausbildung des Filterelements 10 als Faltenfilter kann das Filtermaterial 18 wie vorliegend beispielhaft gezeigt eine Vielzahl von Falten aufweisen. Jedoch sind auch andere Ausgestaltungen des im Betrieb des Filterelements 10 von Luft durchströmbaren Filtermaterials 18 möglich.

Der Rahmen 16, welcher vorliegend das Filtermaterial 18 umfangsseitig vollständig umgibt beziehungsweise einschließt, umfasst eine Frontwand 20. Die Frontwand 20 erstreckt sich senkrecht zu einer Einführrichtung 22, welche in Fig. 1 durch einen Pfeil veranschaulicht ist. In die Einführrichtung 22 kann das Filterelement 10 in den Aufnahmeraum 14 eingeführt werden, welcher in dem Gehäuse 12 oder Luftfiltergehäuse ausgebildet ist (vergleiche Fig. 3).

An einer Frontseite 24 der Frontwand 20 ist ein Befestigungselement 26 angeordnet, welches in Fig. 2 vergrößert dargestellt ist. Der Rahmen 16 umfasst vorliegend auch zwei Seitenwände 28, 30, welche sich ausgehend von der Frontwand 20 in die Einführrichtung 22 erstrecken.

An seinem rückwärtigen Ende ist der Rahmen 16 mittels einer Rückwand 32 geschlossen, welche vorliegend abgewinkelt ausgebildet ist. Dies ist der Form des Gehäuses 12 geschuldet, so dass in Varianten des Filterelements 10 auch ein anders gestalteter Rahmen 16 vorgesehen sein kann. Des Weiteren braucht der Rahmen 16 nicht, wie vorliegend beispielhaft gezeigt, das Filtermaterial 18 umfangsseitig umlaufend zu umschließen.

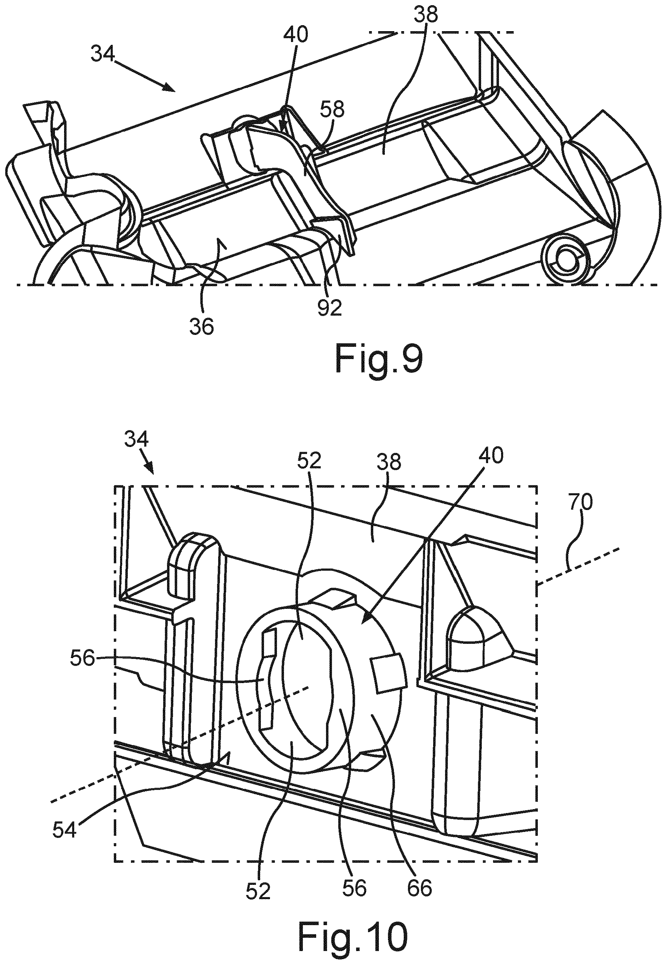

Das in Fig. 2 gezeigte Befestigungselement 26 dient dem Festlegen oder Sichern eines Deckelelements oder Deckels 34 an dem Gehäuse 12. Der Deckel 34 ist in Fig. 9 ausschnittsweise in einer Ansicht auf seine der Umgebung des Gehäuses 12 zugewandte Außenseite 36 gezeigt.

An einem Grundkörper 38 des Deckels 34 ist ein Verschlusselement gehalten, welches vorliegend als Drehverschluss 40 ausgebildet ist. Mittels eines hebelartigen Griffteils 58 kann der Drehverschluss 40 relativ zu dem Grundkörper 38 des Deckels 34 um eine Drehachse 70 verdreht werden, welche in Fig. 10 angedeutet ist. Mit dem Drehverschluss 40 wirkt das Befestigungselement 26 (vergleiche Fig. 2) zusammen, um den Deckel 34 in seiner Schließstellung zu sichern.

Hierfür weist das Befestigungselement 26 einen Schaft 42 auf, welcher vorliegend nach Art eines Zylinders mit einer (optionalen) schlitzförmigen Ausnehmung 62 ausgebildet ist. Der Schaft 42 steht in die Einführrichtung 22 von der Frontseite 24 der Frontwand 20 ab. Von dem Schaft 42 erstrecken sich, vorliegend im Wesentlichen senkrecht zu der Einführrichtung 22, zwei Halteteile in Form eines ersten Flügels 44 und eines zweiten Flügels 46.

Von einem jeweiligen ersten Endbereich 48 hin zu einem zweiten, entgegengesetzten Endbereich 50 weist der jeweilige Flügel 44, 46 vorzugsweise eine rampenförmige Gestalt auf. Dementsprechend verdickt sich der jeweilige Flügel 44, 46 ausgehend von dem jeweiligen ersten Endbereich 48 in Richtung einer Höhe des jeweiligen Flügels 44, 46 zum entgegengesetzten Endbereich 50 des jeweiligen Flügels 44, 46 hin. Die Höhe des jeweiligen Flügels 44, 46 entspricht somit einer Dicke des jeweiligen Flügels 44, 46 in der Einführrichtung 22. Die an dem jeweiligen Flügel 44, 46 ausgebildete Rampe weist damit in Richtung der Frontwand 20 des Filterelements 10.

Mit den Flügeln 44, 46 korrespondieren Ausnehmungen 52 (vergleiche Fig. 10), welche an einer Innenseite 54 des Deckels 34 im Bereich des Drehverschlusses 40 ausgebildet sind. Des Weiteren weist der Drehverschluss 40 gemäß Fig. 10 an seiner Innenseite zwei Halteteile 56 auf, welche dazu ausgebildet sind, die Flügel 44, 46 des Befestigungselements 26 zu hintergreifen, wenn der Deckel 34 in seiner Schließstellung gesichert ist, in welcher der Deckel 34 den Aufnahmeraum 14 im Bereich einer Aufnahmeöffnung 64 (vergleiche Fig. 3) verschließt. Über die Aufnahmeöffnung 64 kann das Filterelement 10 in den Aufnahmeraum 14 eingebracht werden.

Durch die Flügel 44, 46 sind Spanngeometrien beziehungsweise Haltegeometrien auf Seiten des Filterelements 10 bereitgestellt, welche mit den Halteteilen 56 der Drehverschlusses 40 zusammenwirken, um den Deckel 34 in seiner Schließstellung zu sichern. Vorliegend weist also der an dem Deckel 34 angebrachte Drehverschluss 40 die Halteteile 56 auf, welche mit der Spanngeometrie oder Haltegeometrie korrespondieren, die durch die Flügel 44, 46 bereitgestellt ist.

Das Befestigungselement 26, welches vorzugsweise fest mit dem Rahmen 16 des Filterelements 10 verbunden oder einstückig mit der Frontwand 20 ausgebildet ist, sorgt demnach vorliegend für eine Fixierung oder Festlegung des Deckels 34 in seiner Schließ- oder Verschlussstellung nach Art einer Bajonettverriegelung. Und in der Schließ- oder Verschlussstellung verschließt der Deckel 34 den in dem Gehäuse 12 ausgebildeten Aufnahmeraum 14 im Bereich der Aufnahmeöffnung 64.

Aus Fig. 10 ist weiter ersichtlich, dass der Drehverschluss 40 einen hülsenförmigen Haltebereich 66 aufweist, in welchen das Befestigungselement 26 eingeführt werden kann, indem der Deckel 34 geschlossen wird. Hierfür sind die Ausnehmungen 52 des Drehverschlusses 40 zunächst so auszurichten, dass die Flügel 44, 46 im Bereich der Ausnehmungen 52 in den hülsenförmigen Haltebereich 66 eintreten können. Der Haltebereich 66 umgreift dann das Befestigungselement 26. Wenn anschließend durch Betätigen des Griffteils 58 (vergleiche Fig. 9) der Drehverschluss 40 um seine Drehachse 70 gedreht oder verdreht wird, so hintergreifen die Halteteile 56 des Drehverschlusses 40 die Flügel 44, 46. Aufgrund der rampenförmigen Gestalt der Flügel 44, 46 wird hierbei das Befestigungselement 26 mit dem Drehverschluss 40 des Deckels 34 verspannt, und der Deckel 34 wird dicht sitzend gegen das Gehäuse 12 gezogen.

Aufgrund der mit der Gestalt der Flügel 44, 46 korrespondierenden Geometrie der Ausnehmungen 52 lässt sich für eine Person, welche mittels des Deckels 34 den Aufnahmeraum 14 des Gehäuses 12 verschließt, die Funktionsweise des Drehverschlusses 40 visuell intuitiv erfassen. Dies ist im Hinblick auf eine einfache Bedienung des Drehverschlusses 40 vorteilhaft.

Für das Griffteil 58 kann an dem Deckel 34 ein Anschlag 92 ausgebildet sein (vergleiche Fig. 9), welcher eine Endstellung des Drehverschlusses 40 beim Fixieren des Deckels 34 vorgibt. In dieser Endstellung hintergreifen die Halteteile 56 des Drehverschlusses 40 (vergleiche Fig. 10) die Flügel 44, 46 des Befestigungselements 26 (vergleiche Fig. 2).

Aus Fig. 2 ist weiter ersichtlich, dass die Frontwand 20 eine obere Schmalseite 74 aufweist. Dieser oberen Schmalseite 74 liegt in Hochrichtung 68 des Filterelements 10, welche in Fig. 2 durch einen Pfeil veranschaulicht ist, eine untere Schmalseite 72 eines plattenförmigen Grundkörpers 60 der Frontwand 20 gegenüber. Die Hochrichtung 68 ist vorzugsweise in der Einbaulage des Filterelements 10 der Richtung der Schwerkraft entgegengesetzt.

Vorliegend weist das Filterelement 10 eine von dem Befestigungselement 26 von dem Befestigungselement 26 beabstandete Haltelasche 76 auf. Diese Haltelasche 76 steht über die untere Schmalseite 72 - oder Unterkante - des plattenförmigen Grundkörpers 60 der Frontwand 20 über. Vorliegend ist diese Haltelasche 76 einstückig mit dem Grundkörper 60 der Frontwand 20 ausgebildet. Die Funktionen dieser Haltelasche 76 werden im Folgenden mit Bezug auf die nachstehenden Figuren erläutert.

Wie aus Fig. 3 hervorgeht, ist die Aufnahmeöffnung 64 unterseitig durch eine Wandung 78 begrenzt. Diese Wandung 78 ist in Fig. 4 ausschnittsweise und teilweise geschnitten dargestellt.

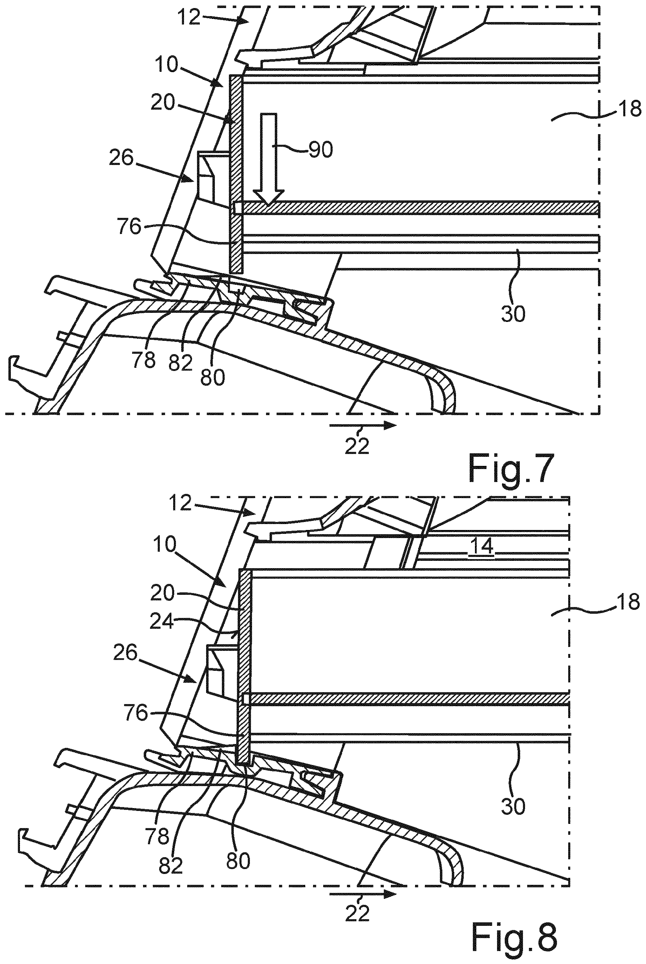

Insbesondere aus Fig. 4 ist gut erkennbar, dass in der Wandung 78 eine Haltemulde 80 ausgebildet ist, welche von den Abmessungen her, vorliegend speziell im Hinblick auf eine Tiefe in die Einführrichtung 22 und auf eine Breite senkrecht zu der Einführrichtung 22, mit den Abmessungen der Haltelasche 76 korrespondiert. Dementsprechend kann die Haltelasche 76 des Filterelements 10 in die Haltemulde 80 eingebracht werden, welche auf Seiten des Gehäuses 12 der Luftfiltereinrichtung vorgesehen ist. Wenn sich das Filterelement 10 in dem Aufnahmeraum 14 des Gehäuses 12 in seiner Einbaulage befindet (vergleiche Fig. 8), so greift dementsprechend die Haltelasche 76 in die Haltemulde 80 ein.

Die Haltelasche 76 oder Rastlasche, welche am unteren Rand des Rahmens 16 ausgebildet ist, fungiert somit nach Art eines Widerlagers des Filterelements 10. Dementsprechend verhindert die Haltelasche 76, dass das Filterelement 10 aus dem Aufnahmeraum 14 herausrutschen kann. Dies ist insbesondere dann vorteilhaft, wenn die Einführrichtung 22 in der konkreten Einbausituation des Filterelements 10 nicht horizontal, sondern geneigt verläuft.

Des Weiteren dient die Haltelasche 76 einer Vorfixierung des Filterelements 10 im Hinblick auf den Deckel 34. Denn wenn sich die Haltelasche 76 in der Haltemulde 80 befindet, so ist auch das Befestigungselement 26 oder Halteelement lagerichtig ausgerichtet, nämlich so, dass der Drehverschluss 40 (vergleiche Fig. 9 und Fig. 10) mit dem Befestigungselement 26 gegenüberliegend zusammenwirken kann.

Vorliegend ist das Befestigungselement 26 in Breiten- oder Querrichtung der Frontwand 20, also senkrecht zu der Einführrichtung 22 gesehen, im Wesentlichen mittig an der Frontseite 24 der Frontwand 20 angeordnet. Dies bewirkt ein sehr gleichmäßiges Andrücken des Deckels 34 gegen das Gehäuse 12, wenn der Drehverschluss 40 betätigt und hierbei um die Drehachse 70 verdreht wird.

Des Weiteren sorgen die beiden großflächigen, im Bereich der Flügel 44, 46 ausgebildeten Rampen des Befestigungselements 26 für eine sehr robuste Fixierung des Deckels 34 an dem Filterelement 10.

Beim Verspannen des Verschlusselements 40 mit dem Befestigungselement 26 durch das Betätigen des Drehverschlusses 40 gerät die über der Haltelasche 76 anschließende Frontseite 24 Filterelements 10 in Anlage mit Rückhalteelementen, welche vorliegend nach Art von rampenförmigen Haltezinken 82 ausgebildet sind (vergleiche Fig. 4), und welche in Einführrichtung 22 der Haltemulde 80 vorgelagert sind. Die Haltemulde 80 und und die Rückhalteelemente 82 bilden somit das Widerlager für die Verspannung von Deckel 34 und Filterelement 10 durch ihr jeweiliges Verschluss- 40 bzw. Befestigungs-element 26

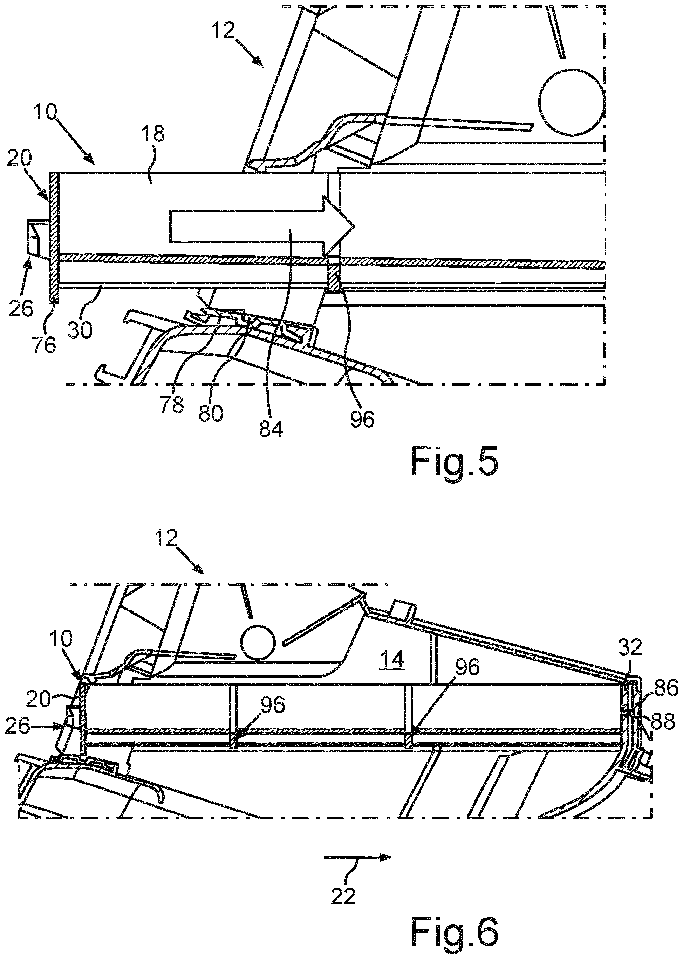

Vorliegend steigen die Haltezinken 82 in Einführrichtung 22 gesehen schräg an, so dass sich die Haltelasche 76 beim Entlanggleiten auf den Haltezinken 82 zunächst in die Hochrichtung 68 bewegt, wenn das Filterelement 10 über die Aufnahmeöffnung 64 in den Aufnahmeraum 14 eingeschoben wird. In Fig. 5 ist dieses Einschieben des Filterelements 10 in den Aufnahmeraum 14 durch einen Pfeil 84 veranschaulicht, dessen Richtung der Einführrichtung 22 gleich ist.

In Fig. 6 ist nun die Situation gezeigt, in welcher das Filterelement 10 in dem Aufnahmeraum 14 seine horizontale Endlage erreicht hat. Dementsprechend befindet sich die Rückwand 32 des Rahmens 16 in der Nähe einer den Aufnahmeraum 14 rückwärtig begrenzenden Wand 86 des Gehäuses 12. Insbesondere kann hierbei eine an der Rückwand 32 des Rahmens 16 angeordnete Dichtung 88 an der Wand 86 anliegen.

In Fig. 7 ist durch einen weiteren Pfeil 90 veranschaulicht, wie sich nach dem Überqueren der Haltezinken 82 (vergleiche Fig. 4) und dem Erreichen der Haltemulde 80 die Haltelasche 76 schwerkraftbedingt nach unten absenkt. Folglich gelangt die Haltelasche 76 schwerkraftbedingt in die nach Art eines Schlitzes ausgebildete Haltemulde 80. Denn der Rahmen 16 des Filterelements 10 fällt schwerkraftbedingt nach unten, sobald sich die Haltelasche 76 in Einführrichtung 22 auf der Höhe der Haltemulde 80 befindet.

In Fig. 8 ist diese Einbausituation dargestellt, in welcher die Haltelasche 76 in die Haltemulde 80 eingreift. In Auszugsrichtung, also entgegen der Einführrichtung 22, ist somit die Haltelasche 76 hinterschnittig mit dem Gehäuse 12. Dann befindet sich auch das Befestigungselement 26 in seiner lagerichtigen Position, in welcher nach einem Herunterklappen des Deckels 34 beziehungsweise einem entsprechenden Verschwenken des Deckels 34 um eine auf Seiten des Gehäuses 12 bereitgestellte Schwenkachse der Drehverschluss 40 mit dem Befestigungselement 26 zusammenwirken kann.

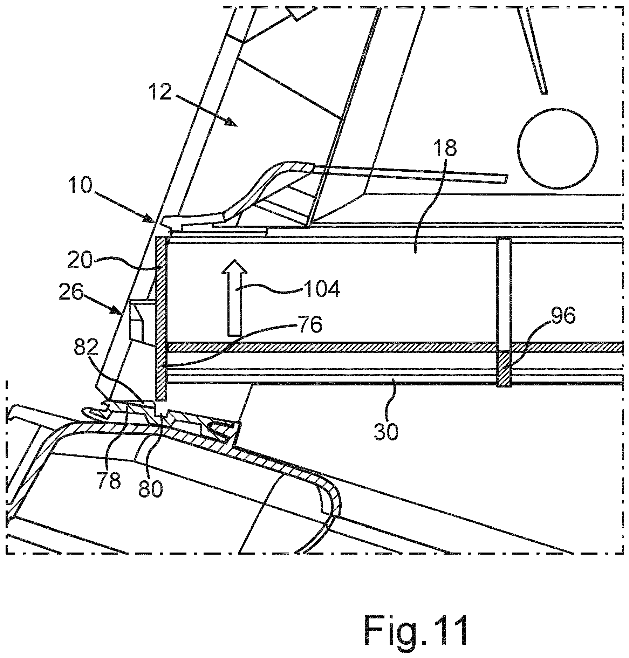

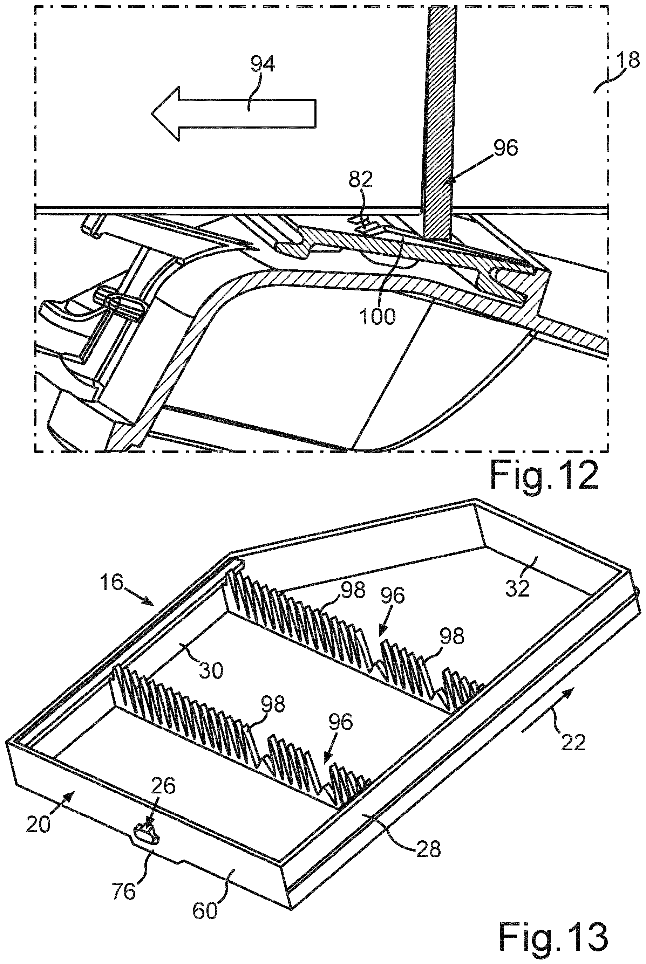

Mit Bezug auf Fig. 11 und Fig. 12 soll das Herausnehmen des Filterelements 10 aus dem Aufnahmeraum 14 erläutert werden. Zunächst wird hierbei der Rahmen 16 des Filterelements 10 im Bereich der Frontwand 20 angehoben, so dass die Haltelasche 76 sich nicht mehr in der Haltemulde 80 befindet. Dieses Herausbewegen der Haltelasche 76 aus der Haltemulde 80 ist in Fig. 11 durch einen Pfeil 104 veranschaulicht, dessen Pfeilrichtung dem in Fig. 7 gezeigten Pfeil 90 entgegengesetzt ist. Ansonsten entspricht die Fig. 7 dargestellte Ausrichtung des Filterelements 10 bezogen auf das Gehäuse 12 der in Fig. 11 gezeigten Ausrichtung des Filterelements 10 bezogen auf das Gehäuse 12.

Anschließend wird das Filterelement 10 entgegen der Einführrichtung 22 aus dem Aufnahmeraum 14 herausgezogen. Diese Bewegung ist in Fig. 12 durch einen Pfeil 94 veranschaulicht. Des Weiteren ist in Fig. 12 ein Stützsteg 96 des Rahmens 16 teilweise geschnitten dargestellt.

Aus Fig. 13 ist ersichtlich, dass der Rahmen 16 des Filterelements 10 vorliegend zwei derartige Stützstege 96 aufweist. Die Stützstege 96 verbinden vorliegend die Seitenwände 28, 30 miteinander, können aber auch Frontwand 20 und Rückwand 32 miteinander verbinden, je nach dem in welcher Richtung das Filterelement 10 gestützt werden soll. Dies ist insbesondere erforderlich, wenn eine Ausdehnung der Filterfläche in eine Richtung sehr groß ist, und damit eine Instabilität Filterelements 10 auftritt.

Zudem weisen die Stützstege 96 eine Vielzahl von nach Art von Zinken 98 eines Kamms ausgebildeten Fortsätzen auf. Diese Zinken 98, welche von einem vorliegend leistenförmigen Rücken des jeweiligen Stützstegs 96 nach oben beziehungsweise in die Hochrichtung 68 abstehen, greifen von unten in die Falten des Filtermaterials 18 (vergleiche Fig. 1) ein. Auf diese Weise stützen insbesondere die sich vorliegend zu einem freien Ende hin verjüngenden Zinken 98 der Stützstege 96 das Filtermaterial 18 ab. Durch das Vorsehen der Stützstege 96 und der Zinken 98 ist eine große Formstabilität des Rahmens 16 und insbesondere des Filtermaterials 18 gewährleistet, selbst wenn das Filterelement 10 in die Einführrichtung 22 vergleichsweise lang ausgebildet ist. Letzteres kann insbesondere bei Verwendung des Filterelements 10 für eine Luftfiltereinrichtung eines Lastkraftwagens der Fall sein.

Die Stützstege 96 sorgen insbesondere dafür, dass Feststoffe, welche sich im Betrieb der Luftfiltereinrichtung auf dem Filtermaterial 18 abgesetzt haben, leicht von dem Filtermaterial 18 abgeklopft oder abgeschüttelt werden können, ohne dass hierbei die Falten des Filtermaterials 18 in Mitleidenschaft gezogen werden.

Aus Fig. 12 ist insbesondere in Zusammenschau mit Fig. 4 gut ersichtlich, dass beim Herausziehen des Filterelements 10 aus dem Aufnahmeraum 14 entgegen der Einführrichtung 22 eine Unterseite der Stützstege 96 entlang jeweiliger Rampen 100 geführt wird. Die Rampen 100 dienen somit als Anlaufschrägen für das Filterelement 10 beim Herausziehen des Filterelements 10 aus dem Aufnahmeraum 14.

Vorliegend sind an der Wandung 78 zwei Rampen 100 ausgebildet, welche in Längserstreckungsrichtung der Haltemulde 80 beziehungsweise in Richtung der Länge der nach Art eines Schlitzes ausgebildeten Haltemulde 80 seitlich neben der Haltemulde 80 angeordnet sind (vergleiche Fig. 4).

Ausgehend von einem Scheitelbereich 102 der jeweiligen Rampe 100, welcher sich in etwa auf der Höhe eines vorderen Rands der Haltemulde 80 befindet, sind die Rampen 100 in Einführrichtung 22 gesehen schräg abfallend ausgebildet. In dem Scheitelbereich 102 weisen die Rampen 100 vorliegend eine Höhe auf, welche größer ist als eine maximale Höhe der Haltezinken 82. Dadurch ist insbesondere verhindert, dass sich die Stützstege 96 beim Herausziehen des Filterelements 10 aus dem Aufnahmeraum 14 entgegen der Einführrichtung 22 mit den Haltezinken 82 verhaken oder an den Haltezinken 82 hängen bleiben (vergleiche Fig. 12).

Des Weiteren sind die Rampen 100 in die Einführrichtung 22 gesehen zu dem Scheitelbereich 102 hin schräg ansteigend ausgebildet, so wie auch die Haltezinken 82 (vergleiche Fig. 4). Dementsprechend verhindern die Rampen 100 auch, dass sich das Filterelement 10 beim Einführen des Filterelements 10 in den Aufnahmeraum 14 mit den Haltezinken 82 verhaken kann.

Die Rampen 100 verhindern außerdem, dass sich die Rückwand 32 des Rahmens 16 beim Herausziehen des Filterelements 10 aus dem Aufnahmeraum 14 insbesondere mit den Haltezinken 82 verhakt, und dass das Filtermaterial 18 beim Herausnehmen des Filterelements 10 aus dem Aufnahmeraum 14 beschädigt wird.

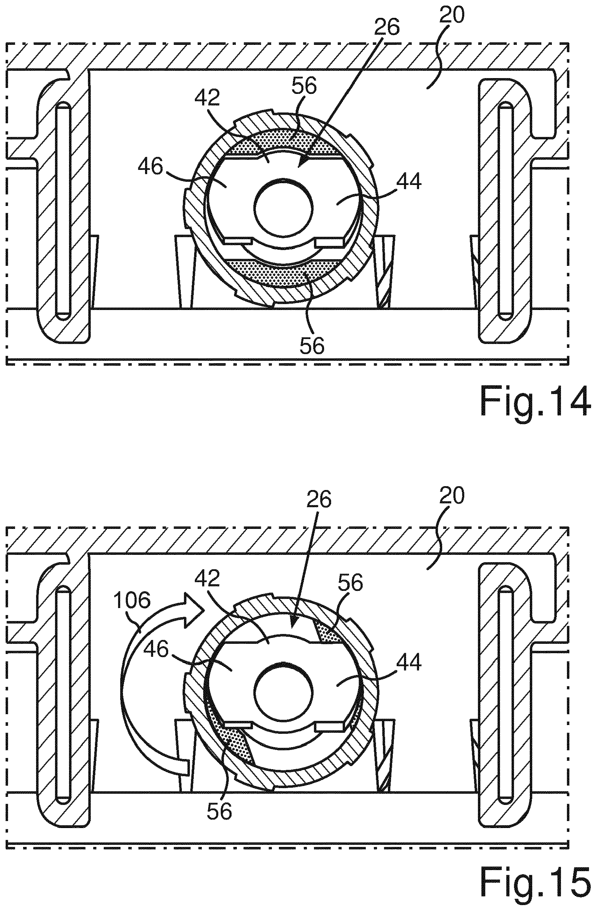

In der in Fig. 14 gezeigten Schnittansicht durch den Deckel 34 ist die Situation erkennbar, in welcher die Halteteile oder Flügel 44, 46 des Befestigungselements 26 noch nicht von den Halteteilen 56 des Drehverschlusses 40 hintergriffen sind.

Durch Verdrehen des Drehverschlusses 40 relativ zu dem Befestigungselement 26 wird, wie in Fig. 15 dargestellt, dafür gesorgt, dass die Halteteile 56 die Flügel 44, 46 hintergreifen. Die entsprechende Drehbewegung des Drehverschlusses 40 ist auch in Fig. 15 durch einen gekrümmten Pfeil veranschaulicht, welcher die Drehrichtung 106 angibt.

## Patentansprüche

1. Filterelement für eine Luftfiltereinrichtung eines Kraftwagens, mit einem Rahmen (16), welcher ein Filtermaterial (18) des Filterelements (10) zumindest bereichsweise umgibt, wobei der Rahmen (16) eine Frontwand (20) umfasst, welche sich senkrecht zu einer Einführrichtung (22) erstreckt, in welche das Filterelement (10) in einen Aufnahmeraum (14) eines Gehäuses (12) der Luftfiltereinrichtung einführbar ist, wobei an einer Frontseite (24) der Frontwand (20) wenigstens ein Befestigungselement (26) angeordnet ist, an welchem ein zum Verschließen des Aufnahmeraums (14) ausgebildeter Deckel (34) der Luftfiltereinrichtung festlegbar ist, und wobei das wenigstens eine Befestigungselement (26) zumindest ein von der Frontseite (24) der Frontwand (20) beabstandetes Halteteil (44, 46) aufweist, welches zum Verschließen des Aufnahmeraums (14) mittels des Deckels (34) von korrespondierenden Halteteilen (56) des Deckels (34) hintergreifbar ist,
**dadurch gekennzeichnet, dass**
das wenigstens eine Befestigungselement (26) zwei Halteteile (44, 46) aufweist, welche als von einem Schaft (42) des Befestigungselements (26) quer zu der Einführrichtung (22) abstehende Flügel ausgebildet sind, wobei das jeweilige Halteteil (44, 46) von einem ersten Endbereich (48) zu einem zweiten Endbereich (50) verlaufend, der Filterwand (20) zugewandt, eine rampenförmige Gestalt aufweist.

2. Filterelement nach Anspruch 1,
**dadurch gekennzeichnet, dass**
das wenigstens eine Befestigungselement (26) in Hochrichtung (68) der Frontwand (20) von einem unteren Rand der Frontwand (20) beabstandet ist und entgegen der Einführrichtung (22) von der Frontseite (24) absteht, so dass es in einen hülsenförmigen Haltebereich (66) eines an dem Deckel (34) angeordneten Verschlusselements (40) einführbar ist, wobei das von dem Haltebereich (66) umgriffene wenigstens eine Befestigungselement (26) an seinen Halteteilen (44,46) durch Drehen des Verschlusselements (40) um eine Drehachse (70) mit den korrespondierenden deckelseitigen Halteelementen (56) des Verschlusselements (40) verspannbar ist.

3. Filterelement nach einem der Ansprüche 1 oder 2,
**dadurch gekennzeichnet, dass**
an einer Schmalseite (72) der Frontwand (20) des Filterelements (10) eine Haltelasche (76) übersteht, wobei durch Einbringen der Haltelasche (76) in eine auf Seiten des Gehäuses (12) der Luftfiltereinrichtung vorgesehene Haltemulde (80) das Filterelement (10) gegen ein Bewegen sicherbar ist.

4. Filterelement nach einem der Ansprüche 1 bis 3,
**dadurch gekennzeichnet, dass**
das Filterelement (10) wenigstens einen, das Filtermaterial (18) abstützenden Stützsteg (96) aufweist, der sich zwischen zwei gegenüberliegenden Wänden (20, 28, 30, 32) des Rahmens (16) erstreckt, wobei er die beiden Wände (20, 28, 30, 32) miteinander verbindet.

5. Luftfiltereinrichtung für einen Kraftwagen, mit einem Filterelement (10) nach einem der Ansprüche 1 bis 4, wobei das Filterelement (10) in einen Aufnahmeraum (14) eingebracht ist, welcher in einem Gehäuse (12) der Luftfiltereinrichtung ausgebildet ist, wobei der Aufnahmeraum (14) mittels wenigstens eines an einem Deckel (34) der Luftfiltereinrichtung angeordneten Verschlusselements (40) verschließbar ist, welches an den beiden rampenförmigen Halteteilen (44, 46) des wenigstens einen Befestigungselements (26) des Filterelements (10) festlegbar ist.

6. Luftfiltereinrichtung nach Anspruch 5,
**dadurch gekennzeichnet, dass**
das wenigstens eine Verschlusselement (40) des Deckels (34) um eine Drehachse (70) drehbar ist und einen hülsenförmigen Haltebereich (66) mit zwei Halteteilen (56) aufweist, so dass das wenigstens eine Befestigungselement (26) des Filterelements von dem hülsenförmigen Haltebereich (66) umgreifbar ist, und in einer Schließstellung des wenigstens einen Verschlusselements (40) die beiden Halteteile (56) des Verschlusselements (40) die zwei Halteteile (44,46) des wenigstens einen Befestigungselements (26) hintergreifen.

7. Luftfiltereinrichtung nach einem der Ansprüche 5 oder 6,
**dadurch gekennzeichnet, dass**
das Gehäuse (12) der Luftfiltereinrichtung wenigstens eine Haltemulde (80) aufweist, in welche die Haltelasche (76) des Filterelements (10) eingesetzt ist, wodurch das Befestigungselement (26) des Filterelements (10) lagerichtig zum Verschließen mit dem Verschlusselement (40) des Deckels (34) ausgerichtet ist.

8. Luftfiltereinrichtung nach Anspruch 7,
**dadurch gekennzeichnet, dass**
das Gehäuse (12) der Luftfiltereinrichtung wenigstens ein, insbesondere als in Einführrichtung (22) gesehen schräg ansteigender, rampenförmiger Haltezinken ausgebildetes, Rückhalteelement (82) aufweist, welches der Haltemulde (80) in Einführrichtung (22) vorgelagert ist.

9. Luftfiltereinrichtung nach Anspruch 7 und 8,
**dadurch gekennzeichnet, dass**
das Gehäuse (12) wenigstens eine Rampe (100) aufweist, welche in Längserstreckungsrichtung der Haltemulde (80) neben der Haltemulde (80) angeordnet ist, wobei die wenigstens eine Rampe (100) ausgehend von der Haltemulde (80) in Einführrichtung (22) gesehen schräg abfallend ausgebildet ist.

10. Luftfiltereinrichtung nach Anspruch 9,
**dadurch gekennzeichnet, dass**
die wenigstens eine Rampe (100) einen Scheitelbereich (102) aufweist, wobei eine Höhe der wenigstens einen Rampe (100) in dem Scheitelbereich (102) größer ist als eine maximale Höhe des wenigstens einen Rückhalteelements (82) und/oder die wenigstens eine Rampe (100) in Einführrichtung (22) gesehen zu dem Scheitelbereich (102) hin schräg ansteigend ausgebildet ist.

## Claims

1. Filter element for an air filter device of a motor vehicle, comprising a frame (16) which surrounds a filter material (18) of the filter element (10) at least in regions, the frame (16) comprising a front wall (20) which extends perpendicularly to an insertion direction (22) and into which the filter element (10) can be inserted into a receiving space (14) of a housing (12) of the air filter device, at least one fastening element (26) being arranged on a front side (24) of the front wall (20), to which fastening element a cover (34) of the air filter device that is designed to close the receiving space (14) can be fixed, and the at least one fastening element (26) having at least one holding part (44, 46) which is spaced apart from the front side (24) of the front wall (20) and behind which corresponding holding parts (56) of the cover (34) can engage in order to close the receiving space (14) by means of the cover (34),
**characterized in that**
the at least one fastening element (26) has two holding parts (44, 46) which are designed as wings protruding from a shaft (42) of the fastening element (26) transversely to the insertion direction (22), the relevant holding part (44, 46) having a ramp-shaped form extending from a first end region (48) to a second end region (50), facing the filter wall (20).

2. Filter element according to claim 1,
**characterized in that**
the at least one fastening element (26) is spaced apart from a lower edge of the front wall (20) in the vertical direction (68) of the front wall (20) and protrudes from the front side (24) counter to the insertion direction (22), so that it can be inserted into a sleeve-shaped holding region (66) of a closure element (40) arranged on the cover (34), it being possible for the at least one fastening element (26) surrounded by the holding region (66) to be clamped on the holding parts thereof (44, 46) by the corresponding cover-side holding elements (56) of the closure element (40) by rotating the closure element (40) about an axis of rotation (70).

3. Filter element according to either claim 1 or claim 2,
**characterized in that**
a holding tab (76) projects on a narrow side (72) of the front wall (20) of the filter element (10), it being possible for the filter element (10) to be secured against movement by introducing the holding tab (76) into a holding recess (80) provided on the sides of the housing (12) of the air filter device.

4. Filter element according to any of claims 1 to 3,
**characterized in that**
the filter element (10) has at least one support web (96) supporting the filter material (18), which extends between two opposite walls (20, 28, 30, 32) of the frame (16), said web connecting the two walls (20, 28, 30, 32) to one another.

5. Air filter device for a motor vehicle, comprising a filter element (10) according to any of claims 1 to 4, wherein the filter element (10) is introduced into a receiving space (14) which is formed in a housing (12) of the air filter device, wherein the receiving space (14) can be closed by means of at least one closure element (40) arranged on a cover (34) of the air filter device, which closure element can be fixed to the two ramp-shaped holding parts (44, 46) of the at least one fastening element (26) of the filter element (10).

6. Air filter device according to claim 5,
**characterized in that**
the at least one closure element (40) of the cover (34) is rotatable about an axis of rotation (70) and has a sleeve-shaped holding region (66) having two holding parts (56), so that the at least one fastening element (26) of the filter element can be gripped by the sleeve-shaped holding region (66), and in a closed position of the at least one closure element (40), the two holding parts (56) of the closure element (40) engage behind the two holding parts (44, 46) of the at least one fastening element (26).

7. Air filter device according to either claim 5 or claim 6,
**characterized in that**
the housing (12) of the air filter device has at least one holding recess (80), into which the holding tab (76) of the filter element (10) is inserted, as a result of which the fastening element (26) of the filter element (10) is aligned in the correct position for closing with the closure element (40) of the cover (34).

8. Air filter device according to claim 7,
**characterized in that**
the housing (12) of the air filter device has at least one retaining element (82), which is in particular designed as ramp-shaped holding prongs which slope obliquely upward, viewed in the insertion direction (22), and which is arranged upstream of the holding recess (80) in the insertion direction (22).

9. Air filter device according to claim 7 and claim 8,
**characterized in that**
the housing (12) has at least one ramp (100) which is arranged next to the holding recess (80) in the longitudinal extension direction of the holding recess (80), the at least one ramp (100) being designed to slope obliquely downward starting from the holding recess (80), viewed in the insertion direction (22).

10. Air filter device according to claim 9,
**characterized in that**
the at least one ramp (100) has an apex region (102), a height of the at least one ramp (100) in the apex region (102) being greater than a maximum height of the at least one retaining element (82), and/or the at least one ramp (100) being designed to slope obliquely upward, viewed in the insertion direction (22), toward the apex region (102).

## Revendications

1. Élément de filtre pour un dispositif de filtre à air d'un véhicule automobile, comportant un cadre (16) qui entoure, au moins dans certaines régions, un matériau de filtre (18) de l'élément de filtre (10), le cadre (16) comprenant une paroi avant (20) qui s'étend perpendiculairement à un sens d'insertion (22) dans lequel l'élément de filtre (10) peut être inséré dans un espace de réception (14) d'un boîtier (12) du dispositif de filtre à air, au moins un élément de fixation (26) étant disposé sur un côté avant (24) de la paroi avant (20), sur lequel élément de fixation un couvercle (34) du dispositif de filtre à air peut être fixé, lequel couvercle est réalisé pour la fermeture de l'espace de réception (14), et l'au moins un élément de fixation (26) présentant au moins une partie de retenue (44, 46) espacée du côté avant (24) de la paroi avant (20), laquelle partie de retenue peut être saisie par l'arrière par des parties de retenue (56) correspondantes du couvercle (34) pour la fermeture de l'espace de réception (14) au moyen du couvercle (34),
**caractérisé en ce que**
l'au moins un élément de fixation (26) présente deux parties de retenue (44, 46) qui sont réalisées sous forme d'ailettes faisant saillie depuis une tige (42) de l'élément de fixation (26) transversalement au sens d'insertion (22), la partie de retenue (44, 46) respective présentant une forme de rampe qui s'étend depuis une première région d'extrémité (48) vers une seconde région d'extrémité (50) et est orientée vers la paroi de filtre (20).

2. Élément de filtre selon la revendication 1,
**caractérisé en ce que**
l'au moins un élément de fixation (26) est espacé d'un bord inférieur de la paroi avant (20) dans la direction verticale (68) de la paroi avant (20) et fait saillie depuis le côté avant (24) dans le sens opposé au sens d'insertion (22), de sorte qu'il peut être inséré dans une région de retenue (66) en forme de douille d'un élément de fermeture (40) disposé sur le couvercle (34), l'au moins un élément de fixation (26) entouré par la région de retenue (66) pouvant être serré sur ses parties de retenue (44, 46) par rotation de l'élément de fermeture (40) autour d'un axe de rotation (70) conjointement avec les éléments de retenue (56) correspondants côté couvercle de l'élément de fermeture (40).

3. Élément de filtre selon l'une des revendications 1 ou 2,
**caractérisé en ce que**
au niveau d'un côté étroit (72) de la paroi avant (20) de l'élément de filtre (10), une patte de retenue (76) fait saillie, l'élément de filtre (10) pouvant être bloqué contre un mouvement par l'insertion de la patte de retenue (76) dans un creux de retenue (80) prévu sur des côtés du boîtier (12) du dispositif de filtre à air.

4. Élément de filtre selon l'une des revendications 1 à 3,
**caractérisé en ce que**
l'élément de filtre (10) présente au moins une traverse de soutien (96) soutenant le matériau de filtre (18), laquelle traverse de soutien s'étend entre deux parois (20, 28, 30, 32) opposées du cadre (16), ladite traverse de soutien reliant les deux parois (20, 28, 30, 32) l'une à l'autre.

5. Dispositif de filtre à air pour un véhicule automobile, comportant un élément de filtre (10) selon l'une des revendications 1 à 4, l'élément de filtre (10) étant introduit dans un espace de réception (14) réalisé dans un boîtier (12) du dispositif de filtre à air, l'espace de réception (14) pouvant être fermé au moyen d'au moins un élément de fermeture (40) disposé sur un couvercle (34) du dispositif de filtre à air, lequel élément de fermeture peut être fixé sur les deux parties de retenue (44, 46) en forme de rampe de l'au moins un élément de fixation (26) de l'élément de filtre (10).

6. Dispositif de filtre à air selon la revendication 5,
**caractérisé en ce que**
l'au moins un élément de fermeture (40) du couvercle (34) peut tourner autour d'un axe de rotation (70) et présente une région de retenue (66) en forme de douille comportant deux parties de retenue (56), de sorte que l'au moins un élément de fixation (26) de l'élément de filtre peut être entouré par la région de retenue (66) en forme de douille, et, dans une position de fermeture de l'au moins un élément de fermeture (40), les deux parties de retenue (56) de l'élément de fermeture (40) saisissent les deux parties de retenue (44, 46) de l'au moins un élément de fixation (26) par l'arrière.

7. Dispositif de filtre à air selon l'une des revendications 5 ou 6,
**caractérisé en ce que**
le boîtier (12) du dispositif de filtre à air présente au moins un creux de retenue (80) dans lequel la patte de retenue (76) de l'élément de filtre (10) est insérée, moyennant quoi l'élément de fixation (26) de l'élément de filtre (10) est orienté dans la position appropriée pour la fermeture à l'aide de l'élément de fermeture (40) du couvercle (34).

8. Dispositif de filtre à air selon la revendication 7,
**caractérisé en ce que**
le boîtier (12) du dispositif de filtre à air présente au moins un élément de retenue anti-retour (82), réalisé en particulier sous la forme d'une dent de retenue en forme de rampe et montant en pente, vue dans le sens d'insertion (22), lequel élément de retenue anti-retour est monté en amont du creux de retenue (80) dans le sens d'insertion (22).

9. Dispositif de filtre à air selon les revendications 7 et 8,
**caractérisé en ce que**
le boîtier (12) présente au moins une rampe (100) qui est disposée à côté du creux de retenue (80) dans la direction d'extension longitudinale du creux de retenue (80), l'au moins une rampe (100) étant réalisée en pente descendante à partir du creux de retenue (80), vue dans le sens d'insertion (22).

10. Dispositif de filtre à air selon la revendication 9,
**caractérisé en ce que**
l'au moins une rampe (100) présente une région de sommet (102), une hauteur de l'au moins une rampe (100) dans la région de sommet (102) étant supérieure à une hauteur maximale de l'au moins un élément de retenue anti-retour (82) et/ou l'au moins une rampe (100), vue dans le sens d'insertion (22), étant réalisée en pente montante vers la région de sommet (102).
